(19) Europäisches Patentamt / European Patent Office / Office européen des brevets

(11) **EP 2 264 429 B1**

(12) **EUROPÄISCHE PATENTSCHRIFT**

(45) Veröffentlichungstag und Bekanntmachung des Hinweises auf die Patenterteilung:
**13.04.2022 Patentblatt 2022/15**

(21) Anmeldenummer: **10010809.1**

(22) Anmeldetag: **19.12.2005**

(51) Internationale Patentklassifikation (IPC):
$G01N\ 15/06\ ^{(2006.01)}$  $B03C\ 3/00\ ^{(2006.01)}$
$B03C\ 3/08\ ^{(2006.01)}$  $B03C\ 3/12\ ^{(2006.01)}$
$B03C\ 3/38\ ^{(2006.01)}$  $B03C\ 3/41\ ^{(2006.01)}$
$B03C\ 3/47\ ^{(2006.01)}$  $B03C\ 3/017\ ^{(2006.01)}$
$G01N\ 15/02\ ^{(2006.01)}$

(52) Gemeinsame Patentklassifikation (CPC):
**G01N 15/0656; B03C 3/017; B03C 3/08; B03C 3/12; B03C 3/38; B03C 3/41; B03C 3/47;** B03C 2201/24; G01N 2015/0277

(54) **Verfahren und Vorrichtung zum Bestimmen einer Elementarkohlenstoff-Gesamtmenge in einem Aerosol mittels Messung einer mittleren Partikelgrösse und einer Gesamtladung der Aerosolpartikel**

Method and device for determining the amount of elemental carbon in aerosol by measuring the average size and total charge of aerosol particles

Procédé et dispositif destinés à la détermination de la quantité de carbone élémentaire dans un aérosol par mesure de la taille moyenne et de la charge totale de particules d'aérosol

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.01.2005 EP 05405015**

(43) Veröffentlichungstag der Anmeldung:
**22.12.2010 Patentblatt 2010/51**

(62) Dokumentnummer(n) der früheren Anmeldung(en) nach Art. 76 EPÜ:
**05405705.4 / 1 681 551**

(73) Patentinhaber: **Testo AG**
**79853 Lenzkirch (DE)**

(72) Erfinder:
• **Burtscher, Heinz**
  **8964 Rudolfstetten (CH)**
• **Fierz, Martin**
  **8700 Küsnacht (CH)**

(74) Vertreter: **Frei Patent Attorneys**
**Frei Patentanwaltsbüro AG**
**Postfach**
**8032 Zürich (CH)**

(56) Entgegenhaltungen:
**EP-A- 1 156 320    US-A- 4 435 681**

• **MATTER U; SIEGMANN H C; BURTSCHER H: "Dynamic field measurements of submicron particles from diesel engines" ENVIRONMENTAL SCIENCE AND TECHNOLOGY, Bd. 33, Nr. 11, 24. April 1999 (1999-04-24), Seiten 1946-1952, XP002607588 American Chemical Society DOI: 10.1021/ES981095W**
• **NTZIACHRISTOS L ET AL: "Use of a corona charger for the characterisation of automotive exhaust aerosol" JOURNAL OF AEROSOL SCIENCE AUGUST 2004 ELSEVIER LTD GB, Bd. 35, Nr. 8, August 2004 (2004-08), Seiten 943-963, XP002607589 DOI: DOI:10.1016/J.JAEROSCI.2004.02.005**
• **BUKOWIECKI ET AL: "Real-time characterization of ultrafine and accumulation mode particles in ambient combustion aerosols" JOURNAL OF AEROSOL SCIENCE, Bd. 33, August 2002 (2002-08), Seiten 1139-1154, XP002324115 PERGAMON**

- FIERZ M ET AL: "Real-time measurement of aerosol size distributions with an electrical diffusion battery" JOURNAL OF AEROSOL SCIENCE 2002 ELSEVIER LTD GB, Bd. 33, Nr. 7, Juli 2002 (2002-07), Seiten 1049-1060, XP002607590 DOI: DOI:10.1016/S0021-8502(02)00057-5
- BURTSCHER H: "Novel instrumentation for the characterization of ultrafine particles." JOURNAL OF AEROSOL MEDICINE : THE OFFICIAL JOURNAL OF THE INTERNATIONAL SOCIETY FOR AEROSOLS IN MEDICINE SUMMER 2002 LNKD- PUBMED:12184865, Bd. 15, Nr. 2, Juli 2002 (2002-07), Seiten 149-160, XP002607591 ISSN: 0894-2684
- FELDPAUSCH P ET AL: "Measurement of ultrafine aerosol size distributions by a combination of diffusion screen separators and condensation particle counters" JOURNAL OF AEROSOL SCIENCE, PERGAMON LNKD-DOI:10.1016/J.JAEROSCI.2005.04.009, Bd. 37, Nr. 5, 1. Mai 2006 (2006-05-01), Seiten 577-597, XP025242267 ISSN: 0021-8502 [gefunden am 2006-05-01]
- K PRZYBILLA ET AL: "Monitoring diesel particulates in working areas with the photoelectric aerosol sensor", GEFAHRSTOFFE REINHALTUNG DER LUFT, vol. 62, no. 6, June 2002 (2002-06), pages 279-284, XP055388457, ISSN: 0949-8036
- Karl Richard Przybilla: "Investigation of particles from combustion with special consideration of elemental carbon", Doctoral Thesis , 2002, XP055388401, DOI: 10.3929/ethz-a-004431673 Retrieved from the Internet: URL:https://www.research-collection.ethz.c h [retrieved on 2017-07-06]
- BURTSCHER ET AL: "Physical characterization of particulate emissions from diesel engines: a review", JOURNAL OF AEROSOL SCIENCE, ELSEVIER, AMSTERDAM, NL, vol. 36, no. 7, July 2005 (2005-07), pages 896-932, XP027737506, ISSN: 0021-8502 [retrieved on 2005-07-01]
- M Kasper ET AL: "NanoMet: On-Line Characterization of Nanoparticle Size and Composition", SAE TECHNICAL PAPER SERIES 2000-01-1998, 19 June 2000 (2000-06-19), pages 1-13, XP055284008, ISSN: 0148-7191, DOI: 10.4271/2000-01-1998 Retrieved from the Internet: URL:https://saemobilus.sae.org/content/200 0-01-1998 [retrieved on 2017-07-06]
- REINHARD NIESSNER ET AL: "The photoelectric aerosol sensor array as a tool for on line and in situ analysis of heavy metal aerosols", SENSORS AND ACTUATORS B: CHEMICAL, vol. 1, no. 1-6, 1 January 1990 (1990-01-01), pages 261-266, XP055631521, NL ISSN: 0925-4005, DOI: 10.1016/0925-4005(90)80212-I

Beschreibung

Die Erfindung betrifft ein Verfahren zum Messen der Elementarkohlenstoffmenge in einem Aerosol.

In Trägergasen suspendierte Partikel (Aerosole) spielen eine wesentliche Rolle in der Atmosphäre, der Atemluft und in vielen technischen Prozessen, zum Beispiel in den Emissionen aus Verbrennungsmotoren. Die Partikel werden oft als Schwebestaub oder Schwebeteilchen bezeichnet. Eine wichtige Aufgabe besteht darin, die Konzentration der Partikel messtechnisch zu erfassen. Partikel im Grössenbereich von kleiner als 10 Mikrometer Durchmesser können vom Menschen eingeatmet werden und können sich negativ auf die Gesundheit auswirken. Neuste Forschungsergebnisse zeigen, dass die üblichen Schutzmechanismen des Menschen insbesondere für Nanopartikel <100nm nicht mehr wirksam sind. Nanopartikel entstehen hauptsächlich in Verbrennungsprozessen wie Automotoren, Kohlekraftwerken, Holzheizungen etc.

Bisherige Normen und Richtlinien geben die Partikelkonzentration meist in Form der Partikelmasse pro Volumeneinheit des Aerosols, beispielsweise in Mikrogramm pro Kubikmeter oder bei Emissionen von Kraftfahrzeugen in Masse pro gefahrene Strecke oder geleistete Energie ($\mu$g/km, $\mu$g/kWh) an. Die so angegebene Partikelbeladung erfasst praktisch nur Partikel, die grösser sind als ca. 0,1 Mikrometer, da die kleineren, die zwar in hoher Anzahlkonzentration auftreten können, massenmässig nicht ins Gewicht fallen. Messverfahren, die kleine Partikel mit entsprechender Gewichtung erfassen können, sind deshalb von aktueller Bedeutung. Im Vordergrund steht dabei eine Messung der Partikelanzahlkonzentration. Dies wird zum Beispiel auch in neuen Vorschlägen einer europäischen Expertenkommission für den Grenzwert von Emissionen von Dieselmotoren verlangt. Der interessierende Grössenbereich reicht im Fall von Dieselpartikeln von einigen Nanometern bis einige hundert Nanometer. Noch grössere Partikel haben auf die Anzahlkonzentration keinen wesentlichen Einfluss.

Heute werden zur Messung der Partikelanzahlkonzentration fast ausschliesslich Kondensationskernzähler eingesetzt (siehe zum Beispiel Aerosol Measurement, Principles, Techniques and Applications. P.A. Baron and K. Willeke, Wilcy, New York, 2001). Dabei werden die Partikel in eine Umgebung mit einem übersättigten Dampf (i.a. Butanoldampf) gebracht. Der Dampf kondensiert auf den Partikeln, wodurch diese soweit wachsen, dass sie anschliessend leicht durch Messung der Lichtstreuung detektiert werden können. Das Zählen der Lichtblitze der einzelnen Partikel erlaubt eine direkte Konzentrationsbestimmung. Diese Methode ist sehr empfindlich, es können auch extrem niedrige Konzentrationen gemessen werden, sie erfordert aber insbesondere eine sehr genaue Einhaltung der Temperaturen bei der Erzeugung und Aufkondensation des übersättigten Dampfes. Das macht sie einerseits aufwendig und andererseits abhängig von den Umgebungsbedingungen.

Ist auch eine Grösseninformation erforderlich, werden hauptsächlich auf der Beweglichkeitsanalyse basierende Systeme eingesetzt, bei denen die Driftgeschwindigkeit geladener Partikel in einem elektrischen Feld gemessen wird. Am verbreitetsten ist der Scanning mobility particle sizer (SMPS, Wang, S.C. and R.C. Flagan: Scanning electrical mobility spectrometer. Aerosol Sci. Technol. 13, 1990, 230-240). Er hat eine relative gute Genauigkeit, aber eine Grössenspektrumsmessung dauert etwa 1-2 Minuten. Seit 1-2 Jahren gibt es neuartige Geräte die auf einem ähnlichen Prinzip basieren, die aber eine Zeitaullösung von ~ 0.1-ls haben (EEPS von TSI, DMS von Cambustion). Diese Geräte sind aber gross, schwer und teuer.

Ein auf der Diffusion basierendes Gerät zur Messung von Grössenverteilungen wurde kürzlich vorgestellt (EP 1 156320 A1). Hier werden die Partikel zunächst mit einem Diffusionsauflader geladen und anschliessen in mehreren Stufen von Diffusionsabscheidern nach ihrer Grösse getrennt und elektrisch gemessen. Mit diesem Messprinzip lassen sich Grössenverteilungen von Partikeln und damit auch Informationen über die Partikelzahl in jeder Grössenklasse bestimmen. Die Apparatur ist aber verhältnismässig aufwendig, und die Auswertung von Messungen ist heikel.

Ein für die Bemessung der Gesundheitsschädlichkeit ebenfalls wichtiger Parameter ist der Elementarkohlenstoffwert, d.h. die Gesamtmenge an in Partikeln vorhandenen Elementarkohlenstoffs. Dies deshalb, weil die Gesundheitsschädlichkeit der Partikel vor allem auf den - meist in Form von polyzyklischen Aromaten vorliegenden - Kohlenstoff zurückzuführen ist. Es wurde bereits vorgeschlagen, für die Messung der Anzahl von aufgeladenen Partikeln mit polyzyklischen Kohlenwasserstoffen an der Oberfläche das Prinzip der photoelektrischen Aufladung zu verwenden. Daraus ist aber die Gesamtmenge des Elementarkohlenstoffs nicht ohne Weiteres ableitbar.

Weitere Dokumente, die den Stand der Technik beschreiben, sind Przybilla et al., "Monitoring diesel particulates in working areas with the photoelectric aerosol sensor",Gefahrstoffe - Reinhaltung der Luft 62 (2002), Matter et al., "Dynamic field measurements of submicron particles from diesel engines", Environmental Science and Technology 33 (1999), Ntziachristos et al., "Use of a corona charger for the characterisation of automotive exhaust aerosol", Journal of Aerosol Science 35 (2004), Bukowiecki et al., "Real-time characterization of ultrafine and accumulation mode particles in ambient combustion aerosols", Journal of Aerosol Science 33 (2002), und Fierz et al., "Real-time measurement of aerosol size distributions with an electrical diffusion battery",Journal of Aerosol Science 33 (2002).

Es ist Aufgabe der vorliegenden Erfindung, ein Verfahren und eine Vorrichtung zum Messen der Partikelkonzentration bzw. Partikelanzahl und/oder der mittleren Partikelgrösse zur Verfügung zu stellen, welche Nachteile bestehender Verfahren überwindet und welches insbesondere rasche Messungen mit einer vergleichsweise wenig komplexen Apparatur ermöglicht. Eine weitere Aufgabe der Erfindung ist, ein Verfahren zur Verfügung zu stellen, welches die Messung eines Elementarkohlenstoffwerts ermöglicht.

Gemäss einem Verfahren und eine Vorrichtung zum Messen der Partikelkonzentration bzw. Partikelanzahl werden Partikel eines Aerosols zunächst in einem Diffusionsauflader bspw. unipolar aufgeladen. Anschliessend werden sie durch einen Diffusionsabscheider geleitet, in dem ein Teil der Partikel abgeschieden wird. Der abgeschiedene Strom wird gemessen und aus dem Strom wird ein Wert für die Anzahlkonzentration ermittelt.

Der in einem Diffusionsabscheider von geladenen Aerosolpartikeln erzeugte Strom wird im Folgenden "Diffusionsabscheidungsstrom" genannt.

Es ist eine Erkenntnis der Erfindung, dass der verhältnismässig einfache zu messende Diffusionsabscheidungsstrom ein Mass für die Partikelanzahlkonzentration darstellt. Dies aus folgenden Gründen

Die mittlere Ladung $\bar{q}$, welche die Partikel im Diffusionsauflader erhalten, ist proportional zum Anlagerungsquerschnitt $K$ der Partikel:

$$\bar{q} \propto K$$

wobei $K$ eine Funktion der Partikelgrösse ist.

Die Wahrscheinlichkeit, dass ein Partikel im Diffusionsabscheider abgeschieden wird, hängt von der Diffusionskonstanten D der Partikel ab. Diese wiederum ist in guter Näherung umgekehrt proportional zum Anlagerungskoeffizienten $K$ (gemäss (A. Keller, M. Ficrz, K. Siegmann, and H. C. Siegmann, and A. Filippov, J. Vac. Sei. Technol. A 19.1 2001, 1-8).

$$D \propto K^{-1}$$

Der Diffusionsabscheidungsstrom $I$, den die abgeschiedenen Partikel im Diffusionsabscheider bewirken, wird gemessen. Er wird durch das Produkt aus Abscheidewahrscheinlichkeit, Partikelladung und Partikelkonzentration $N$ bestimmt, das heisst:

$$I \propto D \cdot \bar{q} \cdot N \propto K \cdot K^{-1} \cdot N \propto N$$

Die beiden grössenabhängigen Faktoren kompensieren sich, der Diffusionsabscheidungsstrom hängt nur noch von der Partikelkonzentration ab und kann somit gemäss der Erfindung als Mass für die Partikelkonzentration verwendet werden.

Der Diffusionsauflader kann bspw. ein unipolarer Diffusionsauflader sein. Er kann einen elektrisch abgeschirmten Bereich mit einem Hochspannungsfeld aufweisen, in welchem Ionen erzeugt werden. Diese strömen durch Öffnungen in der elektrischen Abschirmung (diese ist bspw. als Gitter ausgebildet) in einen vom Aerosol durchströmten Bereich.

In einer besonders bevorzugten Ausführungsform wird ein einziger Diffusionsabscheider verwendet. Bei einem solchen sind die Oberflächen, an denen Partikel abgeschieden werden und dabei zu einem Diffusionsstrom beitragen, miteinander elektrisch verbunden. Es ist also nur ein Strommessgerät zur Erfassung des Diffusionsstroms notwendig. Als i.A. weniger bevorzugte Alternative können auch mehrere elektrisch parallel geschaltete Oberflächenbereiche (d.h. die Oberflächenbereiche sind bspw. mit je einem Elektrometer versehen, und die von diesen ermittelten Messwerte werden addiert, ggf. nach einer Eichanpassung) oder parallel (d.h. von unterschiedlichen Aerosolanteilen) durchströmte Oberflächenbereiche je mit einem Elektrometer verbunden sein. Im Gegensatz zum aus der EP 1 156 320 bekannten Stand der Technik, wo Informationen über die Anzahlkonzentration ggf. indirekt über die Grössenverteilung bestimmt werden können, ist kommt das erfindungsgemässe Verfahren aber ohne eine Mehrzahl von seriell hintereinander angeordneten Diffusionsabscheidern aus. Das erfindungsgemässe Vorgehen ermöglicht daher die Verwendung einer verhältnismässig einfachen Apparatur für die Bestimmung der Anzahlkonzentration.

Der Diffusionsabscheider kann wie das an sich bekannt ist als Plattenabscheider, Gitterabscheider oder Rohrabscheider ausgebildet sein. Auch Kombinationen dieser Prinzipien sind denkbar, bspw. kann der Diffusionsabscheider eingangs eine Plattenkonstruktion und anschliessend damit elektrisch verbunden eine Gitteroder Rohranordnung aufweisen; auch andere Kombinationen sind denkbar.

Wenn bei transienten Vorgängen Partikelkonzentration und/oder Grösse stark variieren, wird auch der Strom geladener Partikel, die den Diffusionsabscheider erreichen, entsprechend schwanken. Neben dem gewünschten Strom abgeschiedener Partikel bewirken diese Schwankungen einen Influenzstrom, welcher die Messung stört. Um diesen zu kompensieren, kann zusätzlich zum Diffusionsabscheider eine Einrichtung zur Messung der Influenz verwendet werden. Dann wird nur der Influenzstrom gemessen. Dieser kann dann wenn nötig nach einer Korrektur der Zeitverzögerung, mit der die Partikel in den beiden Einheiten eintreffen, und Multiplikation mit einem Korrekturfaktor, der unterschiedliche Empfindlichkeiten kompensiert, vom Signal des Diffusionsabscheiders subtrahiert werden. Auf diese Weise kann der Influenzstrom kompensiert werden.

Die Einrichtung zur Messung der Influenz kann dem Diffusionsabscheider in einer seriellen Anordnung vor- oder nachgeschaltet werden. Als Alternative kann sie auch parallel angeordnet werden, d.h. je ein definierter Anteil des Aerosols wird dem Diffusionsabscheider und der Influenzmesseinrichtung zugeführt.

"Parallel" ist hier und im gesamten Dokument natürlich nicht geometrisch aufzufassen sondern bezieht sich auf die Art, in welchem Verhältnis zueinander die einzelnen Einrichtungen in Bezug auf die Strömung angeordnet oder wie sie elektrisch geschaltet sind.

Die Influenzmesseinrichtung kann ähnlich aussehen wie der Diffusionsabscheider selbst, aber keine Abscheideplatten -rohre oder -gitter enthalten. Sie besitzt bspw. dieselbe geometrische Form wie der Diffusionsabscheider, wobei die Dimensionierung (bspw. die Ausdehnung in Durchflussrichtung oder die absolute Grösse) nicht identisch sein muss. Die Elektrode der Influenzmesseinrichtung kann im Wesentlichen auf Nullpotential gelegt sein bzw. dasselbe elektrische Potential aufweisen wie der Diffusionsabscheider.

Eine Influenzstrommessung der vorstehend beschriebenen Art kann auch im Zusammenhang mit anderen Messungen als der Ermittlung der Partikelanzahlkonzentration mittels Diffusionsabscheidung verwendet werden, sofern in einem transienten Prozess (also einem Prozess mit nicht-stationären Messwerten) durch Abscheidung von geladenen Aerosolpartikel an Elektroden erzeugte Ströme gemessen werden. Beispiele dafür sind Messungen der Partikelgrössenverteilung wie in EP 1 156 320 offenbart, Messungen mittels Impaktoren oder Messungen mittels differentieller Mobiltätsanalysatoren DMA. Solche Messungen beruhen darauf, dass ein Aerosol mit geladenen Partikeln eine Gas führende Anordnung durchströmt und - ggf. unter Einfluss physikalischer und/oder chemischer Einwirkungen - ein Anteil der geladenen Partikel an mit einer erste Elektrode verbundenen Abscheideflächen abgeschieden wird. Sie zeichnen sich dadurch aus, dass eine zweite Elektrode vorhanden ist, die vorzugsweise ähnlich ausgestaltet ist wie die erste Elektrode, die aber keine Abscheideflächen aufweist. Die zweite Elektrode ist der ersten Elektrode in Strömungsrichtung vor- oder nachgeschaltet, oder die Elektroden sind wie vorstehend erklärt parallel angeordnet. Dabei ist es wie in der vorstehend erwähnten Ausführungsform der Erfindung nicht notwendig, dass die zweite Elektrode auf einem spezifischen Potential ist; sie kann beispielsweise auf Nullpotential gelegt sein oder dasselbe Potential aufweisen wie die erste Elektrode.

Erfindungsgemäß werden nebst einem näherungsweisen Wert für die Partikelanzahlkonzentration auch Informationen über die Partikelgrösse ermittelt. Die mittlere Partikelladung nämlich ist in einem weiten Grössenbereich in guter Näherung proportional zu $d^x$, wobei $d$ der Partikeldurchmesser ist und der Exponent $x$ ungefähr 1.2 ist. Das heisst dass die Gesamtladungskonzentration $q_{tot}$, welche die Partikel tragen, proportional zu $Nd^x$ ist. Diese Gesamtladungskonzentration kann bestimmt werden, wenn alle Partikel in einem Filter abgeschieden werden und der Strom $I_{tot}$ gemessen wird, den sie dort verursachen.

Wird also sowohl ein Diffusionsabscheider als auch cin Filter verwendet, erhält man einen Strom $I$, der proportional zu $N$ ist und einen Strom $I_{tot}$, der proportional

zu $Nd^x$ ist. Aus dem Quotient der beiden Ströme kann somit der Partikeldurchmesser $d$ bestimmt werden. Es gilt nämlich:

$$d = c \cdot \left( \frac{I_{tot}}{I} \right)^{1/x}$$

Die Proportionalilätskonstante $c$ kann durch Kalibrierung bestimmt oder bei bekannter Vorrichtungsgeometrie näherungsweise berechnet werden. Wenn nicht nur eine Partikelgrösse, sondern eine mehr oder weniger breite Grössenverteilung vorliegt, erhält man durch die Bestimmung von $d$ einen mittleren Partikeldurchmesser. Wird der Filter zur Messung von $I_{tot}$ hinter dem Diffusionsabscheider betrieben (d.h. das Aerosol oder Anteile davon durchströmt bzw. durchströmen in einer seriellen Anordnung nacheinander den Diffusionsabscheider und das Filter), muss zum im Filter gemessenen Strom noch der im Diffusionsabscheider gemessene Diffusionsabscheidestrom $I$ addiert werden, um den Gesamtstrom $I_{tot}$ zu erhalten. Mit dieser Anordnung können Anzahlkonzentration und mittlerer Durchmesser bestimmt werden. Alternativ ist auch eine parallele Anordnung denkbar, wo je ein definierter Anteil des zu charakterisierenden Aerosols durch den Diffusionsabscheider bzw. das Filter gelenkt wird.

Wie bereits erwähnt, gelten die oben beschriebenen Beziehungen näherungsweise. Bei genauerer Betrachtung ist eine gewisse Grössenabhängigkeit vorhanden. Die Bestimmung der Grösse aus den Strömen $I$ und $I_{tot}$ erlaubt eine mindestens teilweise Kompensation dieser Grössenabhängigkeit. Neben der zusätzlichen Grösseninformation kann demnach auch die Genauigkeit der Anzahlkonzentrationsbestimmung verbessert werden, wenn $I_{tot}$ auch gemessen wird. Zum Beispiel kann eine experimentell bestimmte Grössenabhängigkeit berücksichtigt werden.

Erfindungsgemäß wird der im Messverfahren gewonnene mittlere Durchmesser dazu verwendet, eine Elementarkohlenstoff-Gesamtmenge zu ermitteln. Dazu wird ein Teil des zu charakterisierenden Aerosols zusätzlich zur erfindungsgemässen Messung mit Diffusionsaufladung, Diffusionsabscheidung und Gesamtladungskonzentrationsmessung auch noch photoelektrisch aufgeladen und die photoelektrische Aufladung pro Zeiteinheit gemessen. Dies geschieht in einem parallelen Messstrang. Von einem zu charakterisierenden Aerosolstrom wird also ein Teilstrom durch einen ersten Messstrang mit Diffusionsauflader und Diffusionsabscheider - und ggf. weiteren Messgeräten, bspw. zur Messung der Influenz - geleitet, während ein anderer Teilstrom durch einen zweiten Messstrang mit photoelektrischem Auflader und Vorrichtung zur Messung der Gesamtladungskonzentration - bspw. Aerosolelektrometer - geleitet wird.

Durch die Messung im ersten Messstrang lässt sich wie vorstehend ausgeführt ein mittlerer Durchmesser bestimmen. Dieser mittlere Durchmesser kann dazu verwendet werden, aus dem Resultat der Photoemissionsmessung einen Elementarkohlenstoffwert zu bestimmen. Dies aufgrund folgender Überlegungen und Zusammenhänge:

- Wie an sich bekannt ist, wird die Photoemissions-Aufladeeffizienz in erster Linie von der Menge des vorhandenen Kohlenstoffs bestimmt. Die Photomissionsaufladung korreliert demnach gut mit der Elementarkohlenstoffmenge.
- Es wurde experimentell gefunden, dass der Aufladefaktor von der Partikelgrösse abhängt, wenn eine feste Kohlenstoffmenge in Partikelform dargestellt und in einem Trägergas suspendiert wird. Die Abhängigkeit von der Partikelgrösse ist monoton.

Ein erfindungsgemässes Verfahren zum Bestimmen der Elementarkohlenstoff-Gesamtmenge in einem Aerosol mit Schritten A bis D ist in Patentanspruch 1 definiert.

Eine Relation zwischen Partikelgrösse, photoelektrischer Aufladung und Elementarkohlenstoff-Gesamtmenge kann beispielsweise ermittelt werden, indem in einem ersten Schritt eine bekannte Menge Elementarkohlenstoff in Partikelform dargestellt und in einem Trägergas suspendiert wird, worauf am dadurch gebildeten Aerosol die in Anspruch 1 definierten Verfahrensschritte A-C durchgeführt werden. Dies wird für verschiedene Partikelgrössen wiederholt. Solche Messungen können durch andere Verfahren für die Partikelcharakterisierung ergänzt werden. Die nach einer Anzahl von Messungen resultierende Funktion $M=M(PE,d)$ (M=Elementarkohlenstoff-Gesamtmenge, bspw. in $\mu$g, $PE$=Photoelektrische Aufladung, $d$=mittlerer Partikeldurchmesser), ist abhängig von der Konfiguration des photoelektrischen Aufladers. Sie kann aber durch $M=cM_{univ}$ angenähert werden, wobei $M_{univ}$ eine einmal bestimmte allgemeingültige Funktion und c ein apparaturabhängiger Eichfaktor ist.

Eine erfindungsgemässe Vorrichtung wird in Patentanspruch 7 definiert. Die Vorrichtung kann noch Fördermittel - bspw. eine Pumpe - aufweisen, mittels der Aerosoldurchfluss bewirkt und geregelt wird. Alternativ dazu kann die Förderung auch durch externe Mittel bewirkt werden, bspw. bei einer Abgasmessung durch den vom Motor erzeugten Strömungsvortrieb.

Im Folgenden werden Ausführungsbeispiele der Erfindung anhand von Figuren genauer beschrieben. In den Figuren, welche alle schematisch sind, zeigen:

- Fig. 1 einen Diffusionsauflader einer erfindungsgemässen Vorrichtung,

- Fig. 2 einen Diffusionsabscheider einer erfindungsgemässen Vorrichtung,

- Fig. 3 eine Messanordnung zur Messung des Influenzstromes,

- Fig. 4 eine Messanordnung zur Messung des Gesamtstroms, d.h. der Gesamtladung pro Zeiteinheit,

- Fig. 5 ein Gesamtschema,

- Fig. 6 eine Messanordnung zur Messung der Gesamtkohlenstoff-Menge,

- Fig. 7 eine bevorzugte Ausführungsform der Messanordnung gemäss Fig. 7.

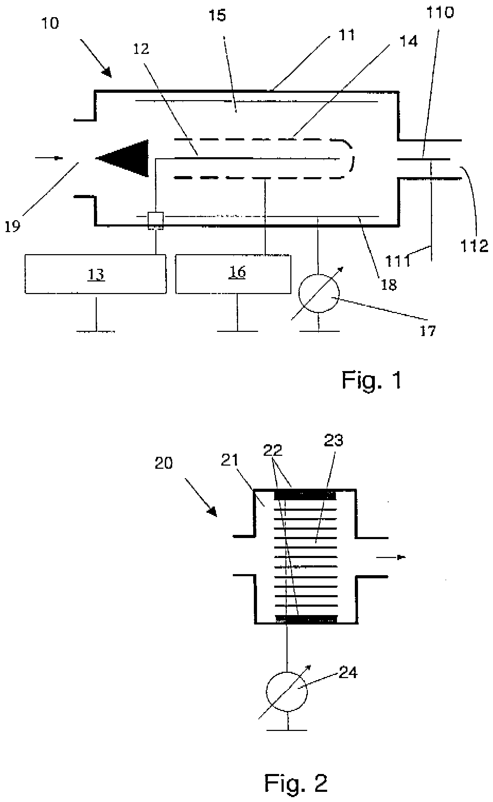

Die Aufladung kann durch Ionen erfolgen, die durch eine elektrische Koronaentladung erzeugt werden. Eine mögliche Konfiguration eines Aufladers 10 ist in **Figur 1** gezeigt. In einem zylindrischen Gehäuse 11 mit einem Aerosoleinlass 19 und einem Aerosolauslass 112 befindet sich axial angeordnet ein dünner Draht 12, an dem eine Hochspannung 13 anliegt die gross genug ist um am Draht eine stille elektrische Entladung (Korona) zu erzeugen. Eine Gitteranordnung 14 schirmt den Bereich, in welchem das Hochspannungsfeld herrscht von dem vom Aerosol durchströmte Volumen 15 elektrisch ab. Die Anzahl der durch das Gitter in den Raum 15 gelangenden Ionen kann durch eine kleine an diesem Gitter angelegte Spannung (durch eine Spannungsquelle 16) variiert und durch ein Amperemeter 17 an einer äusseren, das vom Aerosol durchströmte Volumen umgebenden Elektrode 18 auf Nullpotential gemessen werden. Durch Wahl der am Gitter anliegenden Spannung 16 kann die Effizienz der Aufladung bestimmt werden. Für die beschriebene Anwendung soll sie möglichst hoch sein, die Spannung darf aber nicht zu gross gewählt werden, sonst werden auch geladene Partikel bereits im Auflader abgeschieden. Typischerweise beträgt sie zwischen 5 Vund 30 V Am Ausgang des Aufladers werden nicht an Partikel angelagerte Ionen, welche die Messung verfälschen könnten, durch eine Ionenfalle abgeschieden. Dies kann ein Stab 110 sein, der über eine Zuführung 111 auf eine Spannung gelegt wird die hoch genug ist, um die Ionen abzuscheiden. Aufgrund der geringeren Mobilität werden aufgeladene Partikel bei geeigneter Wahl des elektrischen Potentials des Stabs nicht zu einem die Messung beeinflussenden Prozentsatz am Stab angelagert.

Der Diffusionsabscheider 20 gemäss **Figur 2** kann als Plattenpaket 23 ausgebildet sein, welches über einen Isolator 22 in einem Gehäuse 21 isoliert montiert ist (Plattenabscheider). Mit einem Amperemeter 24 kann der Strom, den auf den Platten abgeschiedene geladene Partikel verursachen gemessen werden. Anstelle des Plattenpaketes sind verschiedene andere Lösungsvarianten möglich. Der Diffusionsabscheider kann zum Beispiel auch als Rohrpaket (Rohrabscheider) oder als Wabenstruktur ausgeführt sein. Auch Anordnungen aus einem oder mehreren Gittern (Gitterabscheider) können eingesetzt werden. In der Literatur sind vielfältige Ausführungen von Diffusionsabscheidem zu finden.

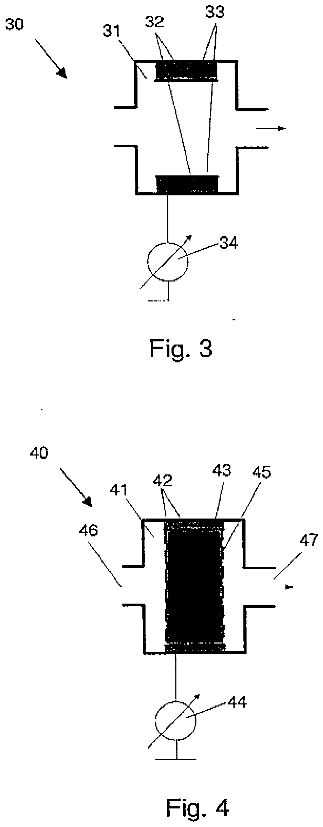

Eine Anordnung zur Messung des Influenzstromes 30 zeigt **Figur 3**. In einem dichten, elektrisch leitenden Gehäuse 31 durchströmt das Aerosol eine isoliert (Isolator 32) montierte Elektrode 33, welche mit einem Amperemeter 34 verbunden ist. Die Anordnung zur Messung des Influenzstroms hat bspw. die im wesentlichen zum Diffusionsabscheider identische zylindrische (oder auch nicht-zylindrische) Form und bspw. auch dieselben Abmessungen, wobei natürlich die Abscheideflächen (Platten, Rohre, Waben, Gitter etc.) fehlen. In einer solchen Konfiguration ist die Menge der an der Elektrode 33 abgeschiedenen Partikel klein im Vergleich zum Influenzsstrom der in dieser aufgrund von Änderungen der Gesamtpartikelladung bei transienten Vorgängen bewirkt wird.

Die Durchführung der Gesamtladungsmessung erfolgt auf an sich bekannte Weise nach dem Prinzip des Aerosolelektrometers. Hier werden die Partikel in einem elektrisch isoliert montierten Filter gesammelt und der dort entstehende Strom wird gemessen, wie dies bei den weiter oben erwähnten Sensoren auch bereits gemacht wird. Ein Beispiel eines Aerosolelektrometers 40 zeigt **Figur 4**. In einem dichten, elektrisch leitenden Gehäuse 41 mit einem Aerosoleinlass 46 und einem Auslass 47 werden die Aerosolpartikel in einem Filter 43 aufgefangen. Der Filter ist entweder selbst elektrisch leitend oder in einem leitenden, und für die Strömung durchlässigen Gehäuse 45 (Faraday Käfig) eingebaut. Er wird isoliert (Isolator 42) montiert und mit einem Amperemeter 44 verbunden. Der gemessene Strom entspricht der Gesamtladung pro Zeiteinheit.

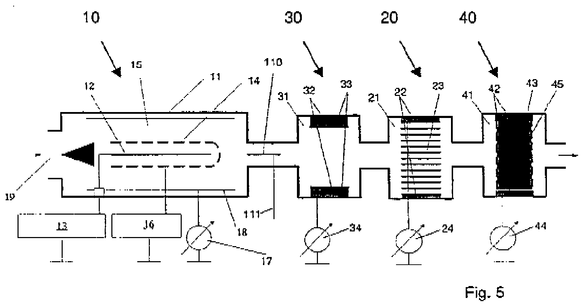

Eine mögliche Kombination der Teilsysteme in den Figuren 1 - 4 ist in **Figur 5** gezeigt, wobei die in den Figuren 1 bis 4 verwendeten Bezugszeichen in Figur 5 entsprechende Elemente bezeichnen. Anschliessend an den Diffusionsauflader 10 sind in Strömungsrichtung der Reihe nach die Einrichtung zum Messen des Influenzsstroms 30, der Diffusionsabscheider 20 und das Aerosolelektrometer 40 angeordnet. Andere Anordnungen sind wie bereits erwähnt ebenfalls denkbar.

Nebst der hier beschriebenen Ausführungsform sind noch viele weitere Arten denkbar, wie die Erfindung realisiert werden kann. Beispielsweise kann der Diffusionsauflader in einer anderen als der beschriebenen Ausführung vorliegen; der Stand der Technik beinhaltet bspw. viele Möglichkeiten, einen Diffusionsauflader zu realisieren. Die Elektrode für die Influenzkorrektur muss nicht im Wesentlichen dieselbe Form aufweisen wie der Diffusionsabscheider sondern kann irgendeine Form haben, die keine nennenswerte Abscheidung mit sich bringt. Beispielsweise kann sie die Form eines dem Diffusionsabscheider vorgelagerten groben Gitters haben, das im Extremfall lediglich aus zwei Stäben besteht.

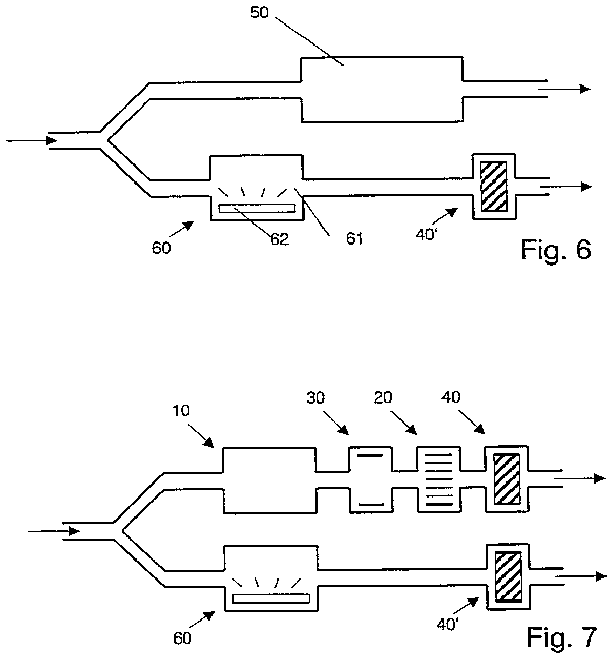

In **Figur 6** ist eine Messanordnung gezeichnet, die die Bestimmung der Elementarkohlenstoff-Gesamtmenge erlaubt. Gemäss der Anordnung wird zwei Messsträngen je ein Teilstrom des zu charakterisierenden Aerosolstroms zugeführt. Im ersten Messstrom wird das Aerosol durch eine Vorrichtung zur Messung einer mittleren Partikelgrösse 50 charakterisiert. Die mittlere Partikelgrösse wird als mittlerer Partikeldurchmesser wiedergegeben. In einem zweiten Messstrang werden Partikel durch einen photoelektrischen Auflader 60 elektrisch geladen und anschliessend ihre Gesamtladung pro Zeiteinheit in einem Aerosolelektrometer 40' gemessen. Der photoelektrische Auflader besitzt eine in einer Aufladekammer 61 angeordnete UV-Lichtquelle 62. Die in der Vorrichtung 50 bestimmte mittlere Partikelgrösse und die vom Aerosolelektrometer 40' gemessene Gesamtladung werden von einer (nicht gezeichneten) Auswerteeinheit dafür verwendet, einen Wert für die Elementarkohlenstoff-Gesamtmenge zu bestimmen.

In **Figur 7** ist eine erfindungsgemässe Ausführungsform der Messanordnung gemäss Figur 6 dargestellt, in welcher die Vorrichtung zur Messung der mittleren Partikelgrösse 50 gemäss Figur 5 ausgebildet ist.

**Patentansprüche**

1. Verfahren zum Bestimmen einer Elementarkohlenstoff-Gesamtmenge in einem Aerosol umfassend die Schritte:

    A. Bestimmen einer mittleren Partikelgrösse der im Aerosol suspendierten Partikel;
    B. Photoelektrisches Aufladen von Aerosolpartikeln;
    C. Bestimmen einer Gesamtladung der photoelektrisch aufgeladenen Aerosolpartikel;
    D. Ermitteln einer Elementarkohlenstoff-Gesamtmenge in Abhängigkeit sowohl von der mittleren Partikelgrösse als auch von der Gesamtladung der photoelektrisch aufgeladenen Aerosolpartikel,

wobei Verfahrensschritt A in einem ersten Messstrang und die Verfahrensschritte B und C in einem zweiten Messstrang durchgeführt werden, wobei von einem zu charakterisierenden Aerosolstrom ein erster Teilstrom durch den ersten und ein zweiter Teilstrom durch den zweiten Messstrang geführt wird, und wobei in Verfahrensschritt A die mittlere Partikelgrösse ermittelt wird, indem das Aerosol mittels Diffusionsaufladung elektrisch aufgeladen wird und anschliessend erstens einen Diffusionabscheiderstrom, den in einem einzigen Diffusionsabscheider (20), einer Mehrzahl von elektrisch parallel geschalteten oder einer Mehrzahl von parallel durchströmten Diffusionsabscheidern abgeschiedene geladene Aerosolpartikel bewirken, und zweitens ein Gesamtstrom des diffusionsaufgeladenen Aerosols gemessen und aus dem Diffusionsabscheiderstrom und dem Gesamtstrom die mittlere Partikelgrösse ermittelt wird.

**2.** Verfahren nach Anspruch wobei das Aufladen des Aerosols mittels eines unipolaren Diffusionsaufladers (10) geschieht.

**3.** Verfahren nach Anspruch 1 oder 2, wobei ein einziger Diffusionsabscheider (20) verwendet wird.

**4.** Verfahren nach einem der Ansprüche 1-3, bei dem der Diffusionsabscheider (20) als Plattenabscheider, als Gitterabscheider, als Rohrabscheider oder als Kombination aus einem Plattenabscheider, Gitterabscheider und/oder Rohrabscheider ausgeführt ist.

**5.** Verfahren nach einem der Ansprüche 1-4, wobei ein eventuell im Diffusionsabscheider (20) auftretender Influenzstrom kompensiert wird, indem ein Influenzstrom in einer zusätzlichen Elektrode (33) gemessen wird und dieser Messwert mit demjenigen des Diffusionsabscheiders verrechnet wird.

**6.** Verfahren nach Anspruch 5, wobei die geometrische Form der zusätzlichen Elektrode (33) der geometrischen Form des Diffusionsabscheiders ohne Abscheideflächen entspricht.

**7.** Vorrichtung zum Bestimmen einer Elementarkohlenstoff-Gesamtmenge in einem Aerosol zur Durchführung des Verfahrens nach einem der vorangehenden Ansprüche, aufweisend

    • eine Gas führende Anordnung, in welcher eine Durchströmrichtung definiert ist,
    • eine Einrichtung zum Bestimmen einer mittleren Partikelgrösse der im Aerosol suspendierten Partikel,
    • einen photoelektrischen Auflader (60)
    • und eine Vorrichtung zum Ermitteln einer Gesamtladung der photoelektrisch aufgeladenen Aerosolpartikel (40'),
    • sowie eine Auswerteeinrichtung, in welcher Mittel zum Berechnen der Elementarkohlenstoff-Gesamtmenge in Abhängigkeit sowohl von einer in der Einrichtung bestimmten mittleren Partikelgrösse als auch von der photoelektrischen Auflading ausgebildet sind,

    wobei die Einrichtung zum Bestimmen einer mittleren Partikelgrösse der im Aerosol suspendierten Partikel einen Diffusionsauflader (10), einen Diffusionsabscheider (20) welche so angeordnet sind, dass in der Durchströmrichtung durchströmendes Aerosol zuerst den Diffusionsauflader und anschliessend mindestens ein Anteil davon den Diffusionsabscheider durchströmt, eine Strommess-Einrichtung zum Bestimmen eines im Diffusionsabscheider durch Anlagerung von geladenen Partikeln des Aerosols erzeugten Diffusionsabscheidungsstroms und ein Aerosolelektrometer (40) zum Messen eines Gesamtstroms aufweist,
    wobei die Einrichtung zum Bestimmen der mittleren Partikelgrösse einen ersten Messstrang bildet,
    und wobei der photoelektrische Auflader (60) und die Vorrichtung zum Ermitteln der Gesamtladung (40') in einem zweiten, zum ersten Messstrang parallel geschalteten Messstrang vorhanden sind.

**8.** Vorrichtung nach Anspruch 7, umfassend eine vom Diffusionsabscheider räumlich getrennte zusätzliche Elektrode (33) und eine zusätzliche Strommess-Einrichtung zum Messen des in der zusätzlichen Elektrode erzeugten Influenzsstroms.

## Claims

**1.** A method for determining a total amount of elemental carbon in an aerosol, comprising the steps of:

    A. Determining an average particle size of particles suspended in the aerosol;
    B. Photoelectrically charging aerosol particles;
    C. Determining a total charge of the photoelectrically charged aerosol particles;
    D. Determining a total elemental carbon amount as a function of both the average particle size and the total charge of the photoelectrically charged aerosol particles,

wherein method step A is carried out in a first measurement line and method steps B and C are carried out in a second measurement line, wherein of an aerosol stream to be characterised, a first partial stream is passed through the first measurement line and a second partial stream is passed through the second measurement line, and wherein in method step A the mean particle size is determined by electrically charging the aerosol by means of diffusion charging and then firstly determining a diffusional precipitator current caused by charged aerosol particles precipitated in a single diffusional precipitator (20), a plurality of diffusional precipitators electrically connected in parallel or a plurality of diffusional precipitators flowed through in parallel, and secondly measuring a total current of the diffusion-charged aerosol, and determining the mean particle size from the diffusional precipitator current and the total current.

**2.** The method according to claim 1, wherein the charging of the aerosol is effected by means of a unipolar diffusion charger (10).

3. The method according to claim 1 or 2, wherein a single diffusional precipitator (20) is used.

4. The method according to any one of claims 1-3, wherein the diffusional precipitator (20) is designed as a plate precipitator, a grid precipitator, a tube precipitator or a combination of a plate precipitator, grid precipitator and/or a tube precipitator.

5. The method according to any one of claims 1-4, wherein any influence current occurring in the diffusional precipitator (20) is compensated for by measuring an influence current in an additional electrode (33) and using this measured value to compensate that of the diffusional precipitator.

6. The method according to claim 5, wherein the geometric shape of the additional electrode (33) corresponds to the geometric shape of the diffusional precipitator without precipitating surfaces.

7. Apparatus for determining a total elemental carbon quantity in an aerosol for carrying out the method according to any one of the preceding claims, comprising

   - a gas carrying arrangement in which a flow direction is defined,
   - means for determining an average particle size of the particles suspended in the aerosol,
   - a photoelectric charger (60)
   - and a device for determining a total charge of the photoelectrically charged aerosol particles (40'),
   - and an evaluation device in which means are formed for calculating the total elemental carbon quantity as a function both of an average particle size determined in the device and of the photoelectric charge,

      the device for determining an average particle size of the particles suspended in the aerosol comprising a diffusion charger (10), a diffusional precipitator (20) which are arranged such that aerosol flowing through in the flow direction first flows through the diffusion charger and then at least a portion thereof flows through the diffusional precipitator, a current measuring device for determining a diffusional precipitator current generated in the diffusional precipitator by accumulation of charged particles of the aerosol, and an aerosol electrometer (40) for measuring a total current, wherein the means for determining the average particle size forms a first measurement line and wherein the photoelectric charger (60) and the device for determining total charge (40') are provided in a second measurement line connected in parallel with the first measurement line.

8. The device according to claim 7, comprising an additional electrode (33) spatially separated from the diffusional precipitator and an additional current measuring device for measuring the influence current generated in the additional electrode.

## Revendications

1. Procédé de détermination d'une quantité totale de carbone élémentaire dans un aérosol, comprenant les étapes consistant à:

   A. Détermination d'une taille moyenne des particules en suspension dans l'aérosol;
   B. Chargement photoélectrique des particules de l'aérosol;
   C. Détermination d'une charge totale des particules d'aérosol chargées photoélectriquement;
   D. Détermination d'une quantité totale de carbone élémentaire en fonction à la fois de la taille moyenne des particules et de la charge totale des particules d'aérosol chargées par voie photoélectrique,

   l'étape A du procédé étant réalisée dans une première chaîne de mesure et les étapes B et C du procédé étant réalisées dans une deuxième chaîne de mesure, un premier flux partiel d'un flux d'aérosol à caractériser étant guidé à travers la première chaîne de mesure et un deuxième flux partiel étant guidé à travers la deuxième chaîne de mesure, et la taille moyenne des particules étant déterminée dans l'étape A du procédé en chargeant électriquement l'aérosol au moyen d'une charge de diffusion et en déterminant un courant de précipitateur de diffusion, qui provoque des particules d'aérosol chargées déposées dans un seul précipitateur à diffusion (20), dans une pluralité de précipitateurs à diffusion montés électriquement en parallèle ou dans une pluralité de précipitateurs à diffusion traversés en parallèle, et deuxièmement, on mesure un courant total de l'aérosol chargé par diffusion et on détermine la taille moyenne des particules à partir du courant du précipitateur à diffusion et du courant total.

2. Procédé selon la revendication 1, dans lequel la charge de l'aérosol s'effectue au moyen d'un chargeur à diffusion (10) unipolaire.

3. Procédé selon la revendication 1 ou 2, dans lequel on utilise un seul précipitateur de diffusion (20).

4. Procédé selon l'une quelconque des revendications 1 à 3, dans lequel le précipitateur de diffusion (20) est réalisé sous la forme d'un précipitateur à plaques, d'un précipitateur à grilles, d'un précipitateur à tuyaux ou d'une combinaison d'un précipitateur à plaques, d'un précipitateur à grilles et/ou d'un précipitateur à tuyaux.

5. Procédé selon l'une des revendications 1 à 4, dans lequel on compense un éventuel courant d'influx apparaissant dans le précipitateur à diffusion (20) en mesurant un courant d'influx dans une électrode supplémentaire (33) et en calculant cette valeur de mesure avec celle du séparateur à diffusion.

6. Procédé selon la revendication 5, dans lequel la forme géométrique de l'électrode supplémentaire (33) correspond à la forme géométrique du précipitateur à diffusion sans surfaces de précipitation.

7. Dispositif de détermination d'une quantité totale de carbone élémentaire dans un aérosol pour la mise en œuvre du procédé selon l'une quelconque des revendications précédentes, comprenant

- un dispositif de guidage de gaz dans lequel une direction de passage est définie,
- un dispositif de détermination de la taille moyenne des particules en suspension dans l'aérosol,
- un chargeur photoélectrique (60)
- et un dispositif pour déterminer une charge totale des particules d'aérosol (40') chargées photoélectriquement,
- ainsi qu'un dispositif d'évaluation, dans lequel sont formés des moyens pour calculer la quantité totale de carbone élémentaire en fonction aussi bien d'une taille moyenne de particules déterminée dans le dispositif que de la charge photoélectrique,

le dispositif pour déterminer une taille moyenne de particule des particules en suspension dans l'aérosol comprenant un chargeur à diffusion (10), un séparateur à diffusion (20) qui sont disposés de telle sorte que l'aérosol s'écoulant dans la direction d'écoulement traverse d'abord le chargeur à diffusion et ensuite au moins une partie de celui-ci traverse le séparateur à diffusion, un dispositif de mesure de courant pour déterminer un courant de dépôt par diffusion généré dans le séparateur par diffusion par dépôt de particules chargées de l'aérosol et un électromètre d'aérosol (40) pour mesurer un courant total,

le dispositif de détermination de la taille moyenne des particules formant une première chaîne de mesure, et dans lequel le chargeur photoélectrique (60) et le dispositif de détermination de la charge totale (40') sont présents dans une deuxième chaîne de mesure connectée en parallèle à la première chaîne de mesure.

8. Dispositif selon la revendication 7, comprenant une électrode supplémentaire (33) séparée spatialement du séparateur à diffusion et un dispositif de mesure de courant supplémentaire pour mesurer le courant d'influx généré dans l'électrode supplémentaire.

Fig. 1

Fig. 2

Fig. 3

Fig. 4

Fig. 5

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1156320 A1

- EP 1156320 A

### In der Beschreibung aufgeführte Nicht-Patentliteratur

- **P.A. BARON ; K. WILLEKE.** *Beispiel Aerosol Measurement, Principles, Techniques and Applications,* 2001
- **WANG, S.C. ; R.C. FLAGAN.** Scanning electrical mobility spectrometer. *Aerosol Sci. Technol.,* 1990, vol. 13, 230-240
- **PRZYBILLA et al.** Monitoring diesel particulates in working areas with the photoelectric aerosol sensor. *Gefahrstoffe - Reinhaltung der Luft,* 2002, vol. 62
- **MATTER et al.** Dynamic field measurements of submicron particles from diesel engines. *Environmental Science and Technology,* 1999, vol. 33

- **NTZIACHRISTOS et al.** Use of a corona charger for the characterisation of automotive exhaust aerosol. *Journal of Aerosol Science,* 2004, vol. 35
- **BUKOWIECKI et al.** Real-time characterization of ultrafine and accumulation mode particles in ambient combustion aerosols. *Journal of Aerosol Science,* 2002, vol. 33
- **FIERZ et al.** Real-time measurement of aerosol size distributions with an electrical diffusion battery. *Journal of Aerosol Science,* 2002, vol. 33
- **A. KELLER ; M. FICRZ ; K. SIEGMANN ; H. C. SIEGMANN ; A. FILIPPOV.** *J. Vac. Sei. Technol. A,* 2001, vol. 19 (1), 1-8